# EUROPÄISCHE PATENTSCHRIFT

(11) **EP 1 638 188 B1**
(45) Veröffentlichungstag und Bekanntmachung des Hinweises auf die Patenterteilung: **02.05.2007**
(21) Anmeldenummer: 05014930.1
(22) Anmeldetag: 09.07.2005
(51) Int. Cl.: H02K 3/18, H02K 3/32, H02K 3/34, H02K 3/52, H02K 3/50

(54) **Motor, insbesondere für Niederspannung**
Motor, especially for low voltage
Moteur, en particulier pour basse tension

(30) Priorität: 20.09.2004 DE 102004046544
(43) Veröffentlichungstag der Anmeldung: 22.03.2006
(73) Patentinhaber: ebm-papst St. Georgen GmbH & Co. KG, 78112 St. Georgen (DE)
(72) Erfinder: Hartkorn, Hans-Walter, Dipl.-Ing., 81243 München (DE); Iles-Klumpner, Dorin, Dipl.-Ing., 78112 St. Georgen (DE)
(74) Vertreter: Raible, Tobias

(56) Entgegenhaltungen:
- EP-A- 1 207 613
- DE-B- 1 018 528
- GB-A- 622 032
- US-A- 3 333 131
- US-A- 3 543 067
- US-A1- 2001 010 442
- PATENT ABSTRACTS OF JAPAN Bd. 2002, Nr. 06, 4. Juni 2002 (2002-06-04) -& JP 2002 044894 A (AISIN SEIKI CO LTD), 8. Februar 2002 (2002-02-08)

## Beschreibung

Die Erfindung betrifft einen Motor, insbesondere für Niederspannung.

Im Elektromotorenbau wird eine Motorwicklung üblicherweise mit lackisolierten Kupferdrähten hergestellt. Die Lackisolierung ist ein- oder mehrschichtig aufgetragen. Je nach Verwendung werden spezielle Lackqualitäten verwendet, z. B. für hohe Motortemperaturen. Eine solche Lackisolierung isoliert die aneinander liegenden Drähte einer Spule.

Ferner wird bei überlappten Wicklungen zwischen den Phasen der Wicklung eine sog. Phasenisolierung verwendet. Diese Wicklungen werden anschließend je nach den Erfordernissen zusätzlich mit Isolierlacken im Tauch- bzw. Träufelverfahren imprägniert. Die verwendeten Drahtdurchmesser liegen meist zwischen 0,1 und 1,5 mm.

Zur Herstellung solcher Spulen gibt es verschiedenen Wickelverfahren.

Z. B. können die Motorspulen auf Spulenkörper gewickelt werden. Bei Außenläufermotoren und Kollektormotoren verwendet man eine Flyerwickeltechnik. Bei Kurzschlussläufermotoren (Drehstrommotoren und Einphasenmotoren) verwendet man das Flyerwickeln und die Einziehtechnik. Bei Universalmotoren und bei der Einzelzahnwicklung bei elektronisch kommutierten Motoren (ECM) verwendet man die Nadelwickeltechnik.

Diese Wickelverfahren erreichen üblicherweise Kupferfüllfaktoren von 45 bis 60 % bei Verwendung eines Spulenkörpers und Einziehtechnik, und von ca. 35 % bei der Nadelwickeltechnik.

Es ist auch bekannt, in der Hochspannungsmaschinentechnik (Drehstromgeneratoren) - statt der bekannten Wickeltechnik - bei Windungszahlen von 1 bis 10 Windungen pro Spule statt Wickeldrähten Kupferstäbe mit Bandagenisolierungen zu verwenden, oder sog. Hairpins (haarnadelförmige Spulen) in Form von lackisolierten Dickdrähten.

Aus der US 2001/0 010 442 A1 ist ein Stator für eine Innenläufer-Synchronmaschine bekannt. Dieser Stator besteht aus einem Blechpaket mit Statorzähnen, die voneinander durch Nuten getrennt sind. In den Nuten ist eine Statorwicklung angeordnet. Diese hat Spulen, welche mit Epoxiharz umgossen und auf den Statorzahn aufgeschoben sind. Diese Spulen sind aus U-förmig gebogenen flachen Leitern hergestellt.

Aus der japanischen Patent-Offenlegungsschrift 2002/044 894 A kennt man einen Stator mit Statorzähnen, welche voneinander durch Nuten getrennt sind. Auf die Statorzähne sind Wickelkörper aufgeschoben, die anschließend in üblicher Weise bewickelt werden.

Ferner kennt man aus der US-A-3 543 067 einen sog. Wendepol für eine Gleichstrommaschine. Solche Pole werden verwendet, um Bürstenfeuer zu vermeiden und werden in der neutralen Zone angeordnet. Ein solcher Wendepol hat einen Polkern, und an diesem sind isolierende Distanzstücke festgeschraubt, in welche flache Leiter hochkant und in Form einer durchgehenden Spule eingelegt werden.

Bei manchen Antriebsaufgaben steht nur eine Spannungsquelle mit niedriger Spannung zur Verfügung, z. B. auf Fahrzeugen, und deshalb muss dort die Statorwicklung einen niedrigen Innenwiderstand haben, wenn man geringe Spannungsabfälle und Kupferverluste anstrebt. Dies bedeutet, dass die Wicklungen große Querschnitte haben müssen. Dabei ist es wichtig, Kurzschlüsse zwischen den einzelnen Windungen zu vermeiden, wie sie durch Schwachstellen der Lackdrahtisolierung oder Isolationsschäden beim Wickelvorgang entstehen können.

Es ist deshalb eine Aufgabe der Erfindung, einen neuen Motor bereitzustellen, welcher sich besonders für Betrieb mit niedrigen Spannungen eignet.

Diese Aufgabe wird erfindungsgemäß gelöst durch einen Motor gemäß Anspruch 1. Hierbei haben die einzelnen Spulen U-förmige Wicklungselemente, deren Leiterquerschnitt zumindest überwiegend von der Kreisform abweicht. An einem Statorzahn ist ein Formstück vorgesehen, das auf seiner Außenseite mit isolierenden Führungsausnehmungen für die genannten Wicklungselemente vorgesehen ist. Dieses Formstück hat die Aufgabe, die Wicklungselemente gegen den zugeordneten Statorzahn zu isolieren und diese Wicklungselemente in einem gesicherten, isolierten Abstand voneinander zu halten. Man kann dieses Formstück einzeln oder im Verbund auf die Statorzähne aufschieben. Auch kann es z. B. im Spritzguss oder in sonstiger Weise auf den betreffenden Zahn aufgebracht werden. Es hat folgende Funktionen:
a) Isolation Windung gegen Windung.
b) Isolation Windung gegen Statoreisen.

Die Erfindung ermöglicht also bevorzugt das Einbringen von Spulen mit Windungszahlen von kleiner als zehn Windungen und mit hohen Windungsquerschnitten. Sie ermöglicht ferner Nutfüllfaktoren von >50 % für Einzelzahnwicklungen, und sie ermöglicht die Vermeidung von Windungsschlüssen, wie sie sonst durch Schwachstellen der Lackdrahtisolierung bzw. durch Beschädigungen dieser Isolation bei der Herstellung solcher Spulen auftreten können.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: ein Statorblech, wie es bei der Erfindung verwendet werden kann,
- Fig. 2: ein Statorblechpaket, welches aus Statorblechen gemäß Fig. 1 hergestellt ist.
- Fig. 3: eine Darstellung einer Drehstromwicklung für das Statorblechpaket der Fig. 2,
- Fig. 4: eine Darstellung der Statorwicklung gemäß Fig. 3 in üblicher Darstellung und in sogenannter Sternschaltung, zusammen mit Bauteilen für die elektronische Kommutierung,
- Fig. 5: eine Draufsicht auf einen in Fig. 6 dargestellten Isolierkörper, gesehen in Richtung des Pfeiles V der Fig. 6,
- Fig. 6: eine Darstellung des Isolierkörpers der Fig. 5, gesehen in Richtung des Pfeiles VI der Fig. 5,
- Fig. 7: eine Draufsicht auf den Isolierkörper der Fig. 6, gesehen in Richtung des Pfeiles VII der Fig. 6,
- Fig. 8 bis Fig. 11: raumbildliche Darstellungen des Isolierkörpers der Fig. 5 bis 7, gesehen aus verschiedenen Richtungen,
- Fig. 12: eine raumbildliche Darstellung eines ersten U-förmigen Wicklungselements 100, welches ein Anschlussglied 102 zum Anschluss an eine der Phasen U, V oder W hat,
- Fig. 13: eine Draufsicht von oben auf das Wicklungselement 100 der Fig. 12, gesehen in Richtung des Pfeiles XIII der Fig. 12,
- Fig. 14: eine Draufsicht auf das Wicklungselement 100 der Fig. 12 und 13, gesehen in Richtung des Pfeiles XIV der Fig. 13,
- Fig. 15: eine raumbildliche Darstellung eines U-förmigen Wicklungselements 134, welches einen Teil einer einzelnen Windung bildet,
- Fig. 16: eine Draufsicht, gesehen in Richtung des Pfeiles XVI der Fig. 15,
- Fig. 17: eine Draufsicht, gesehen in Richtung des Pfeiles XVII der Fig. 16,
- Fig. 18: eine Draufsicht von unten auf ein U-förmiges Wicklungselement 142, welches zum Anschluss eines Wicklungsstrangs an den Sternpunkt 76 des Motors dient,
- Fig. 19: eine Draufsicht, gesehen in Richtung des Pfeiles XIX der Fig. 18,
- Fig. 20: eine Draufsicht, gesehen in Richtung des Pfeiles XX der Fig. 19,
- Fig. 21: eine Darstellung einer teilweise fertig gestellten Spule mit insgesamt fünf Windungen, welche auf einem Isolierkörper nach den Fig. 5 bis 11 angeordnet sind, in raumbildlicher Darstellung,
- Fig. 22: eine Draufsicht auf die Anordnung der Fig. 21, gesehen in Richtung des Pfeiles XXII der Fig. 23,
- Fig. 23: eine Draufsicht, gesehen in Richtung des Pfeiles XXIII der Fig. 22,
- Fig. 24: eine Draufsicht, gesehen in Richtung des Pfeiles XXIV der Fig. 23,
- Fig. 25: eine raumbildliche Darstellung analog Fig. 21, aber gesehen aus einem anderen Blickwinkel,
- Fig. 26: eine Darstellung analog Fig. 21 und 25, gesehen aus einem anderen Blickwinkel,
- Fig. 27: einen Querverbinder 106, gesehen in Richtung des Pfeiles XXVII der Fig. 28,
- Fig. 28: eine Draufsicht, gesehen in Richtung des Pfeiles XXIIX der Fig. 27,
- Fig. 29: eine raumbildliche Darstellung des Querverbinders 106 der Fig. 27 und 28,
- Fig. 30: eine raumbildliche Darstellung, welche symbolisch den Vorgang der Montage der Statorwicklung in einem Statorblechpaket 42 zeigt,
- Fig. 31: eine raumbildliche Darstellung der beiden Spulen einer Phase zusammen mit dem zugeordneten Querverbinder 72 und dem Stanzteil 76 für den Sternpunkt des Motors,
- Fig. 32: eine Darstellung analog Fig. 31, aber in der Draufsicht in Richtung des Pfeiles XXXII der Fig. 31,
- Fig. 33: eine Darstellung, welche schematisch zeigt, wie bei der Herstellung einer Spule die Enden von zwei U-förmigen Wicklungselementen durch ein Verbindungselement verbunden werden,
- Fig. 34: eine raumbildliche Darstellung eines erfindungsgemäßen Stators im montierten Zustand,
- Fig. 35: eine Draufsicht auf ein Ende des fertig montierten Stators, gesehen in Richtung des Pfeiles XXXV der Fig. 36, und
- Fig. 36: einen Schnitt, gesehen in Richtung der Linie XXXVI-XXXVI der Fig. 35.

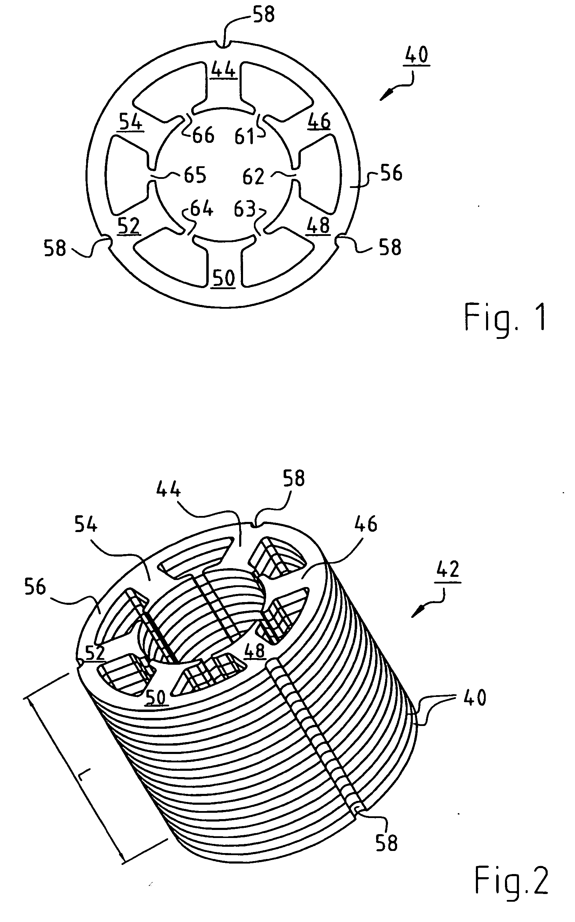

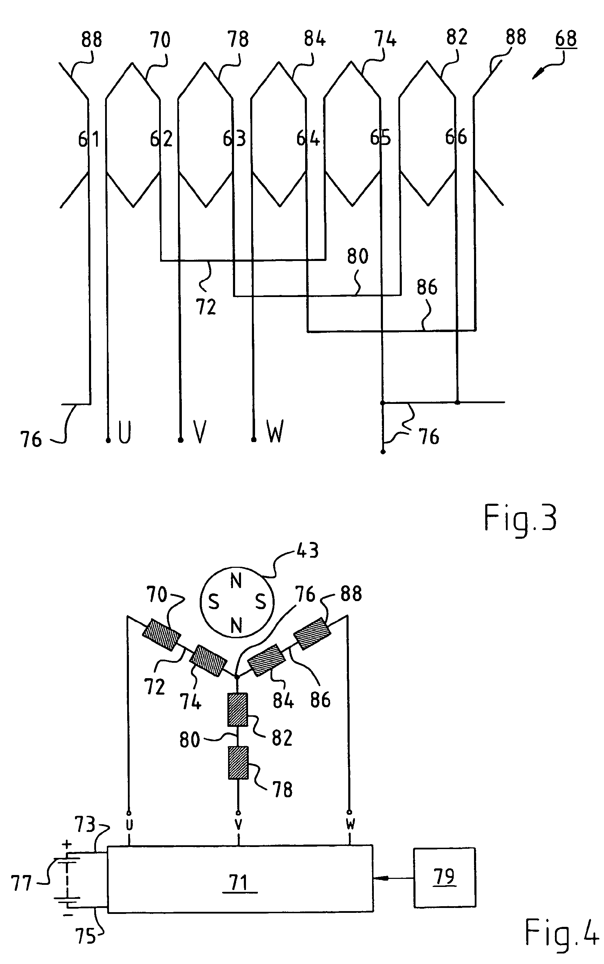

**Fig. 1** zeigt ein Ausführungsbeispiel eines Einzelblechs 40 und **Fig. 2** ein daraus hergestelltes Blechpaket (lamination stack) 42 für einen Innenläufermotor, dessen Rotor 43 in Fig. 4 schematisch angedeutet und vierpolig dargestellt ist. Naturgemäß sind auch andere Polzahlen möglich.

Das Blech 40 hat sechs ausgeprägte Statorpole 44, 46, 48, 50, 52 und 54 und einen magnetischen Rückschluss (yoke) 56. Außen sind die Bleche 40 mit Führungsnuten 58 für ihre Montage versehen.

Zwischen den Statorpolen befinden sich Nuten 61 bis 66. Die Nut 61 befindet sich zwischen den Statorpolen 44 und 46, etc., wie in Fig. 1 dargestellt.

**Fig. 3** zeigt die Anordnung einer dreiphasigen Statorwicklung 68 bekannter Bauart in den Nuten 61 bis 66. Z.B. geht von einem Anschluss U eine Verbindung zu einer Spule 70, die in den Nuten 61 und 62 liegt. Von dieser Spule 70 geht eine Querverbindung 72 zu einer Spule 74, die in einem Abstand von 360° el. (bezogen auf die Polteilung der Rotorpole) von der Spule 70 in den Nuten 64 und 65 liegt. Diese Spule 74 ist ihrerseits an einen Sternpunkt 76 angeschlossen, d.h. es handelt sich bei der dargestellten Wicklung 68 um eine Stern- oder Y-Schaltung. Naturgemäß wäre auch eine Dreiecksschaltung möglich, wie das dem Fachmann bekannt ist.

Von einem Anschluss V geht eine Verbindung zu einer Spule 78, die in den Nuten 62 und 63 liegt, und von dieser geht eine Querverbindung 80 zu einer Spule 82, die in den Nuten 65 und 66 angeordnet ist. Diese ist ebenfalls an den Sternpunkt 76 angeschlossen.

Schließlich geht von einem Anschluss W eine Verbindung zu einer Spule 84, die in den Nuten 63 und 64 liegt, und von dieser geht eine Querverbindung 86 zu einer Spule 88, die in den Nuten 66 und 61 liegt und ebenfalls an den Sternpunkt 76 angeschlossen ist.

**Fig. 4** zeigt in der üblichen Darstellung die sechs Spulen, ihre Querverbinder 72, 80 und 86, und den Sternpunkt 76. Jeder der drei Stränge U, V, W hat zwei in Serie geschaltete Spulen, die über eine Querverbindung miteinander verbunden sind, wie bei Fig. 3 beschrieben

Die drei Stränge U, V, W sind an eine Endstufe 71 angeschlossen, die dazu dient, die Wicklung 68 mit einem dreiphasigen Strom zu versorgen, bevorzugt mit sinusförmigen Strömen, um ein möglichst gleichförmiges Drehmoment zu erreichen. Die Energie kommt aus einem Gleichstrom-Zwischenkreis mit einer positiven Leitung 73 und einer negativen Leitung 75, die ihre Energie z.B. aus einer Batterie 77 erhalten, deren Spannung meist mindestens 12 V beträgt. Zur Steuerung der Endstufe 71 dient ein Steuergerät 79, das dieser die entsprechenden Signale liefert, wie das dem Fachmann bekannt ist.

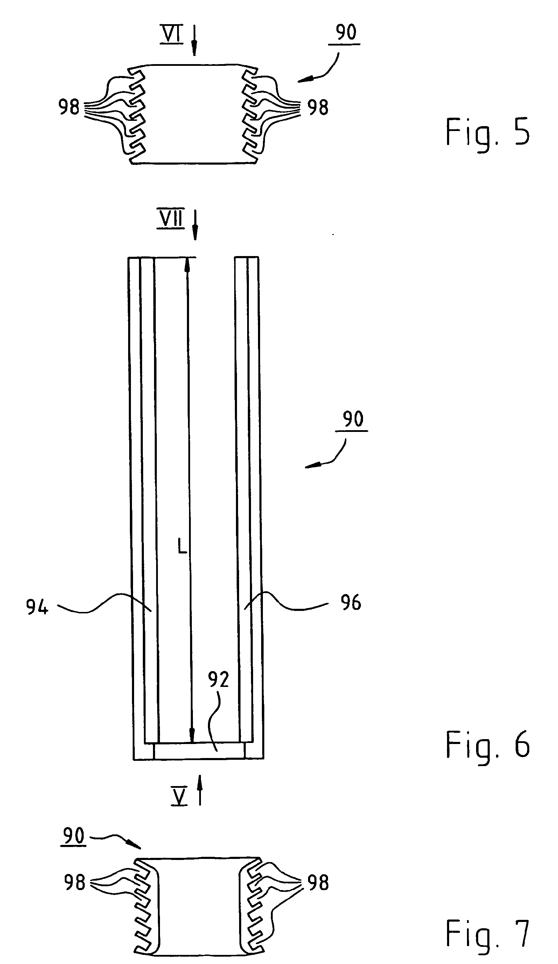

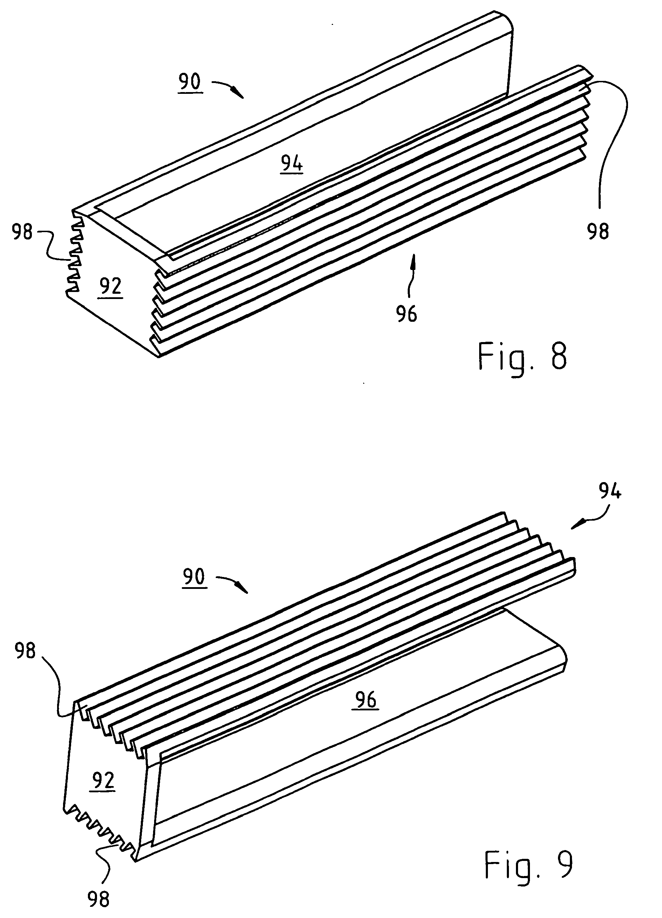

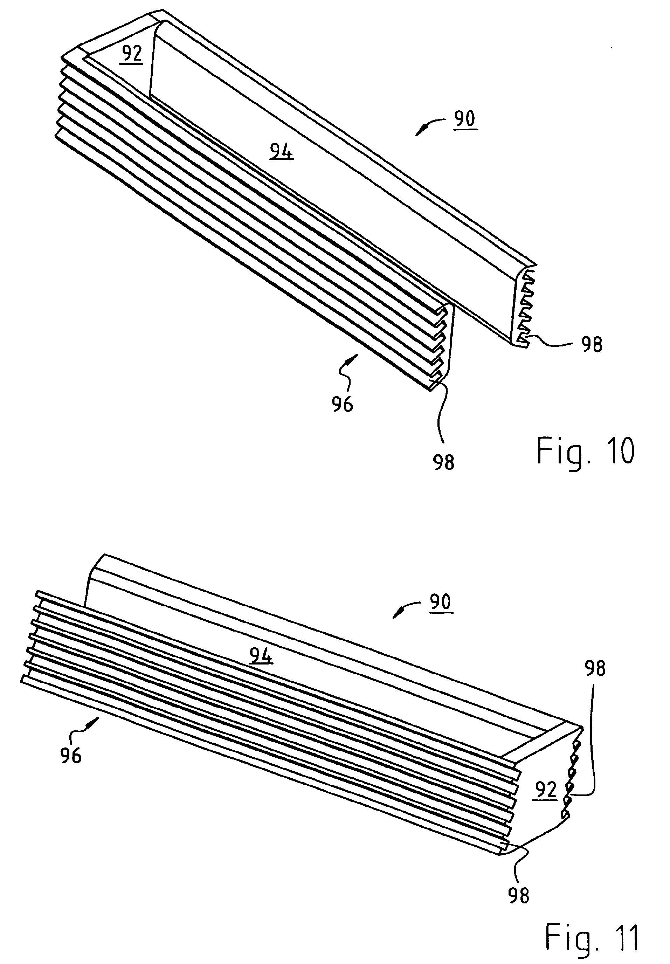

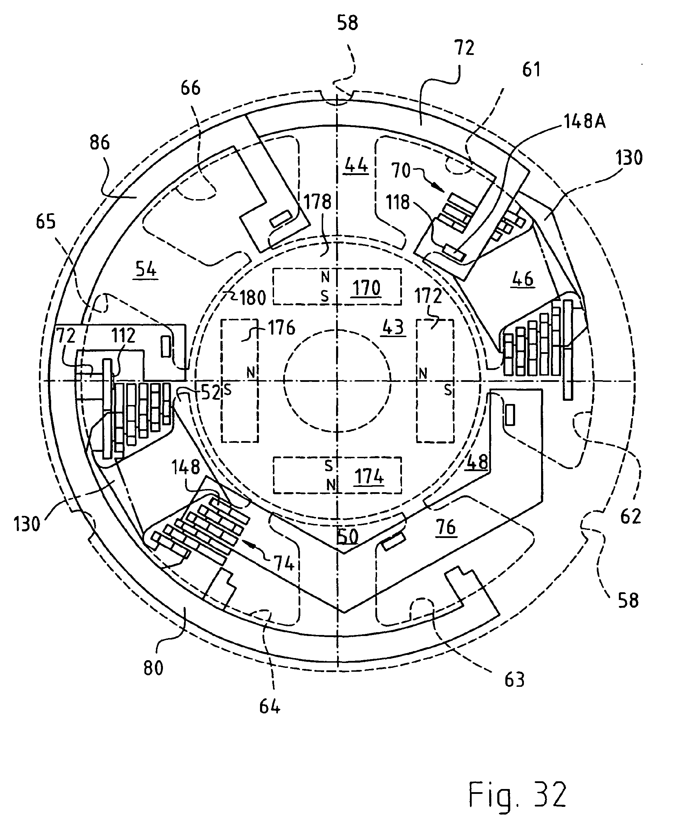

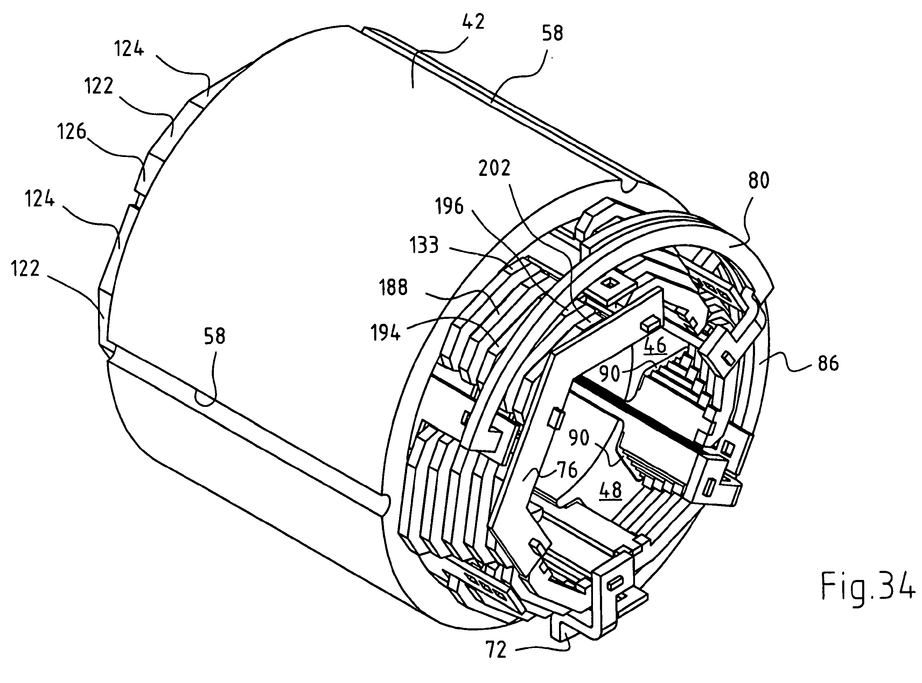

Die **Fig. 5 bis 11** zeigen verschiedene Darstellungen eines U-förmigen Isolations-Formstücks 90, das nach seiner Montage einen der ausgeprägten Statorpole (Statorzähne) 44 bis 54 auf drei Seiten umgibt, wie das in Fig. 32 für die Einzelzähne 46 und 52 dargestellt ist, ebenso in Fig. 34 für die Einzelzähne 46 und 48. Das Formstück 90 hat ein kurzes Querstück 92, an dem zwei längere Schenkel 94, 96 angeordnet sind, die auf ihren voneinander abgewandten Seiten mit isolierenden Führungsnuten 98 versehen sind. Wie in Fig. 2 und 6 dargestellt, entspricht die Länge L der Schenkel 94, 96 im wesentlichen der Länge L (Fig. 2) des Blechpakets 42. Dieses Formstück 90 kann ggf. auch als Spritzgussteil direkt auf den entsprechenden Statorzahn aufgespritzt werden, was die Herstellung vereinfacht.

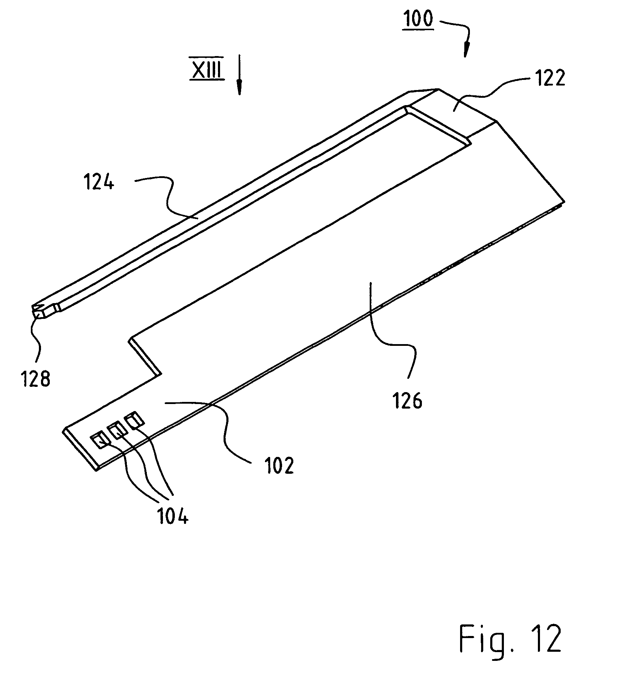

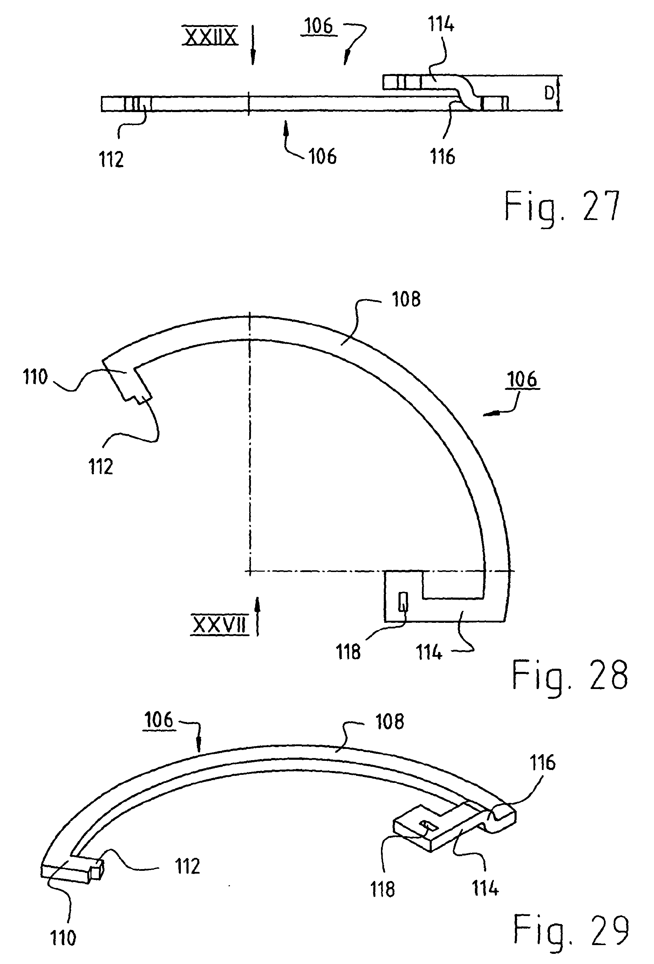

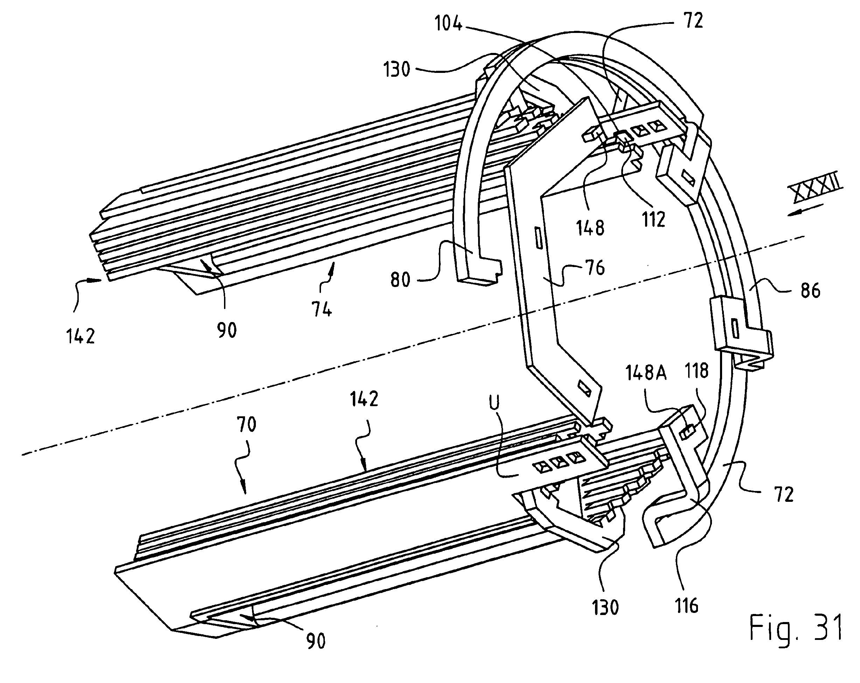

Die **Fig. 12 bis 14** zeigen ein U-förmiges Blechteil 100, das einen Teil einer Spule der Statorwicklung 68 bildet und zum Anschluss der Phase U (oder V, oder W) verwendet wird. Dazu hat es ein Anschlussteil 102 mit drei Löchern 104, von denen gemäß Fig. 31 eines zum Anschluss eines Querverbinders 106 dient, der in den Fig. 27 bis 29 dargestellt ist.

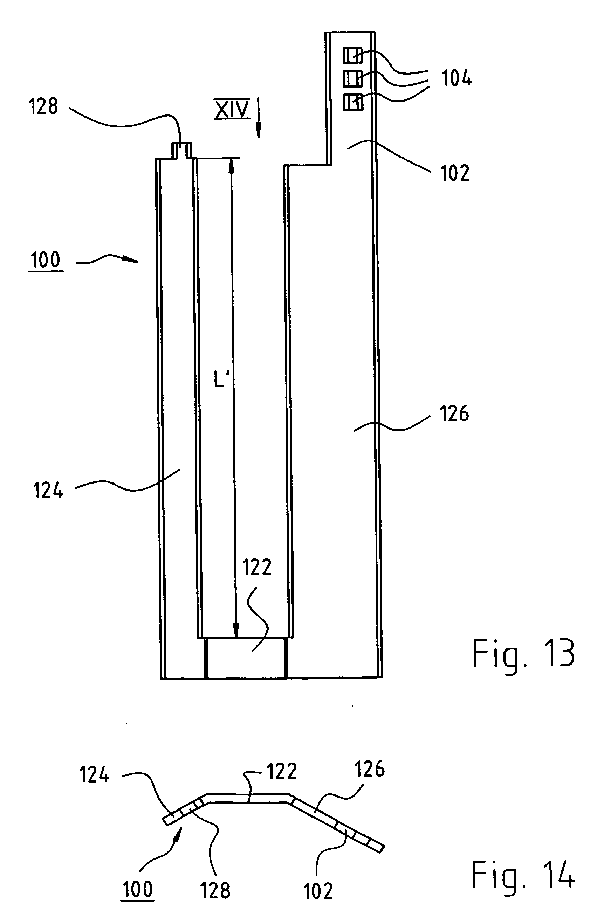

Die Querverbinder 106 für die drei Phasen U, V, W sind weitgehend, aber nicht vollständig, identisch. Ein solcher Querverbinder ist in den **Fig. 27 bis 29** dargestellt. Sie haben jeweils einen Umfangsabschnitt 108, der sich über etwa 140° mech. erstreckt. Dieser geht in Fig. 28 am linken Ende über in einen nach innen ragenden Abschnitt 110, an dem ein Vorsprung 112 vorgesehen ist, der bei der Montage in eines der drei Löcher 104 (Fig. 12 und 13) gesteckt und mit diesem elektrisch verbunden wird, z.B. durch Schweißen, Löten, eine Crimpverbindung, oder dgl..

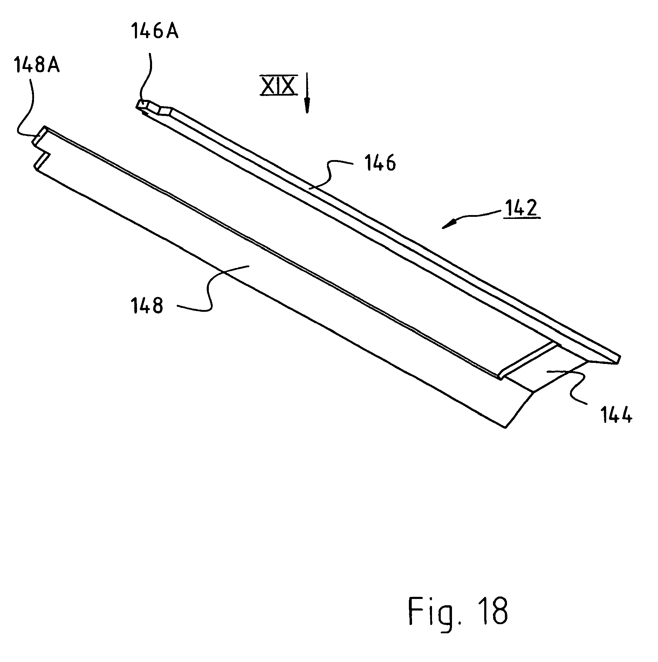

An seinem in Fig. 28 rechten Ende hat der Querverbinder 106 einen nach innen ragenden Abschnitt 114, der an einer Stelle 116 abgekröpft ist und deshalb um einen Abstand D (Fig. 27) zum Abschnitt 108 parallel verschoben ist. Am Abschnitt 114 befindet sich eine Ausnehmung 118 zur Verbindung mit einem in den Fig. 18 bis 20 dargestellten Wicklungselement.

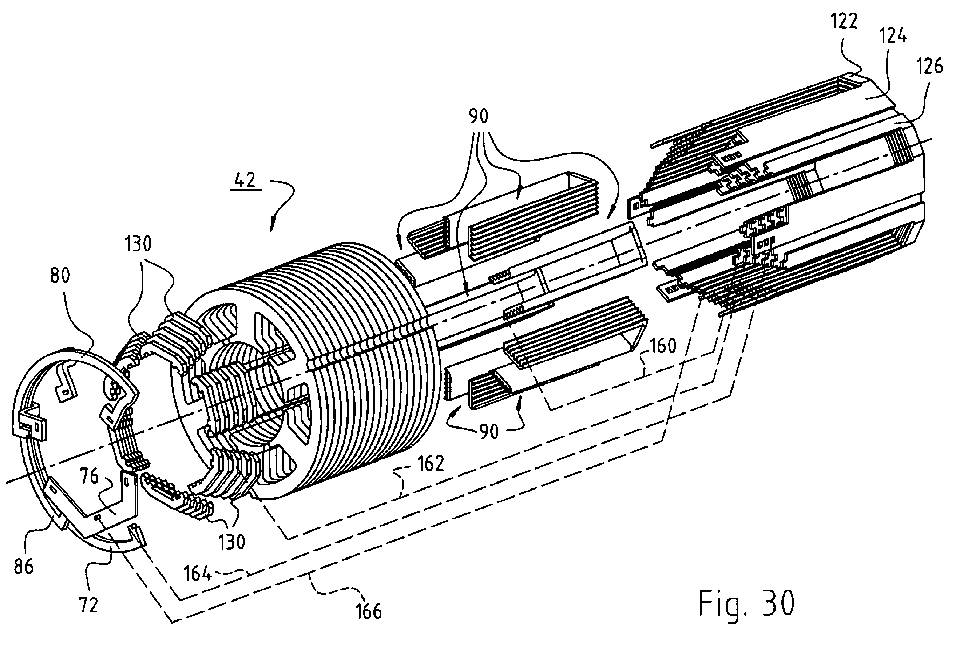

Es ist darauf hinzuweisen, dass der Abstand D für die Phasen U, V und W verschieden ist, wie das aus Fig. 30 und 31 klar hervorgeht.

Das U-förmige Blechteil 100 hat, wie aus den Fig. 12 bis 14 hervorgeht, ein dachartiges Profil. Es hat an der Basis des U einen kurzen Abschnitt 122, der einstückig mit zwei längeren Schenkeln 124, 126 ausgebildet ist. Das Anschlussteil 102 ist am freien Ende des Schenkels 126 vorgesehen. Am freien Ende des Schenkels 124 befindet sich ein Vorsprung 128.

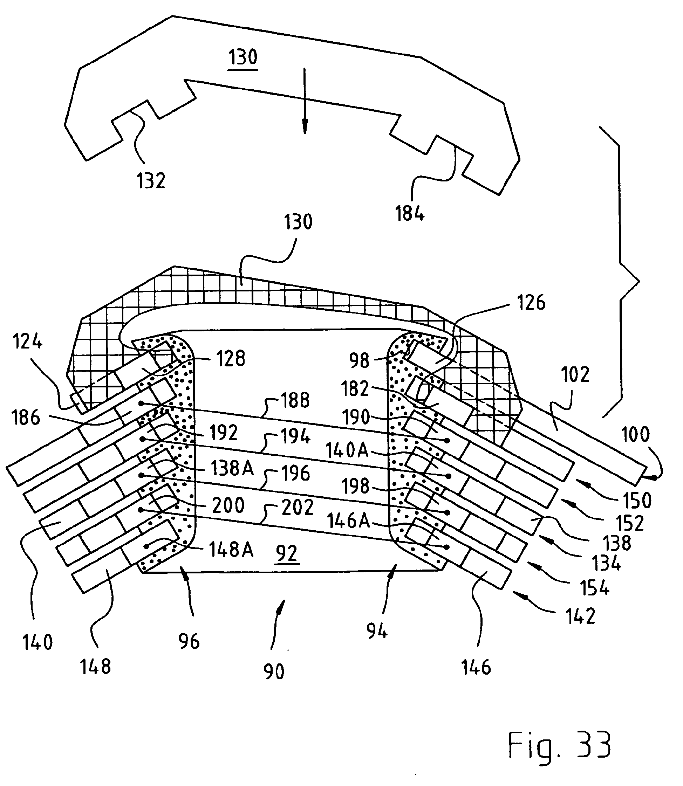

Fig. 33 zeigt, dass sich dort das Blechteil 100 im Formstück 90 in der obersten Führungsausnehmung 98 befindet, und dass der Vorsprung 128 mit einem bügelartigen Verbindungsteil 130 elektrisch verbunden ist, das eine Ausnehmung 132 hat, welche diesen Vorsprung 128 umgreift und in diesem Zustand mit ihm verschweißt wird.

Die Länge des Blechteils 100 geht aus Fig. 13 hervor, wo eine Länge L' zum Vergleich eingetragen ist. Die Länge L' entspricht der Länge L des Blechpakets 42 plus der Dicke des Teil 92. Die Schenkel 124, 126 ragen also nur wenig aus dem Blechpaket 142 heraus, damit die Gesamtlänge des Stators 42 nach seiner Fertigstellung möglichst kurz ist.

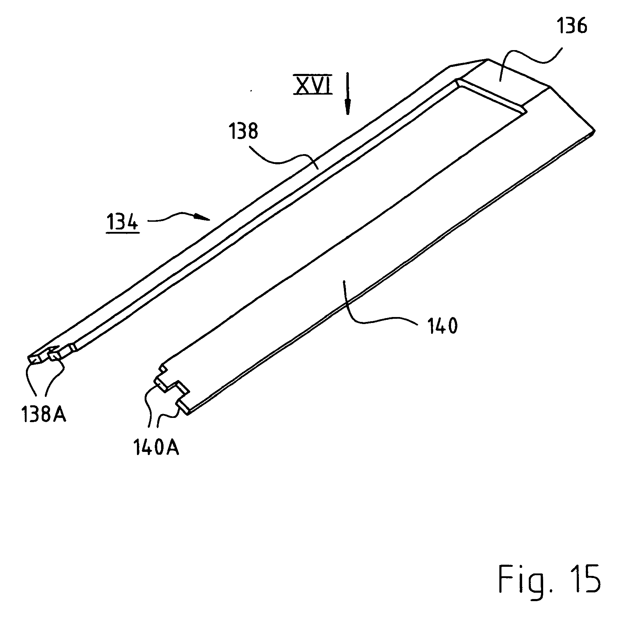

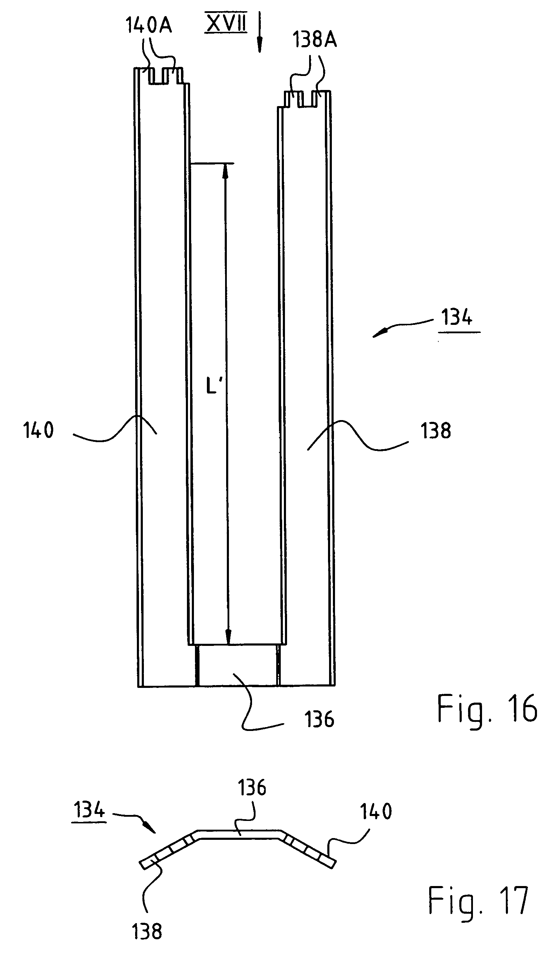

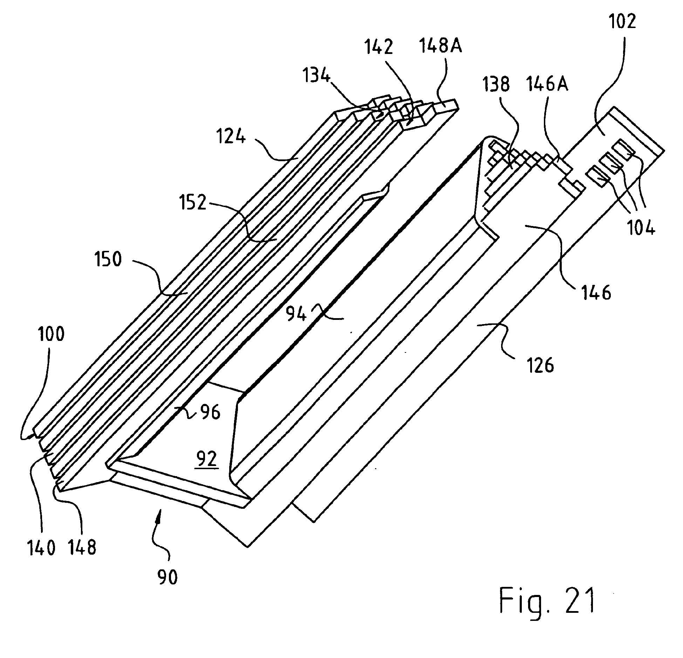

Die **Fig. 15 bis 17** zeigen ein gestanztes und gebogenes Blechteil 134, das wie die anderen Blechteile aus Kupfer oder einer Kupferlegierung hergestellt ist. In Fig. 33 ist es das dritte Blechteil von unten. Es hat an der Basis des U ein kurzes Verbindungsteil 136, das einstückig mit zwei geraden Schenkeln 138, 140 ist, die beide an ihren freien Enden mit Verbindungselementen 138A, 140A versehen sind. Die Länge L' (gemäß obiger Definition) ist in Fig. 16 zum Vergleich eingetragen. Man erkennt, dass die Schenkel 138, 140 hier weiter aus dem Blechpaket 42 herausragen, vgl. Fig. 21.

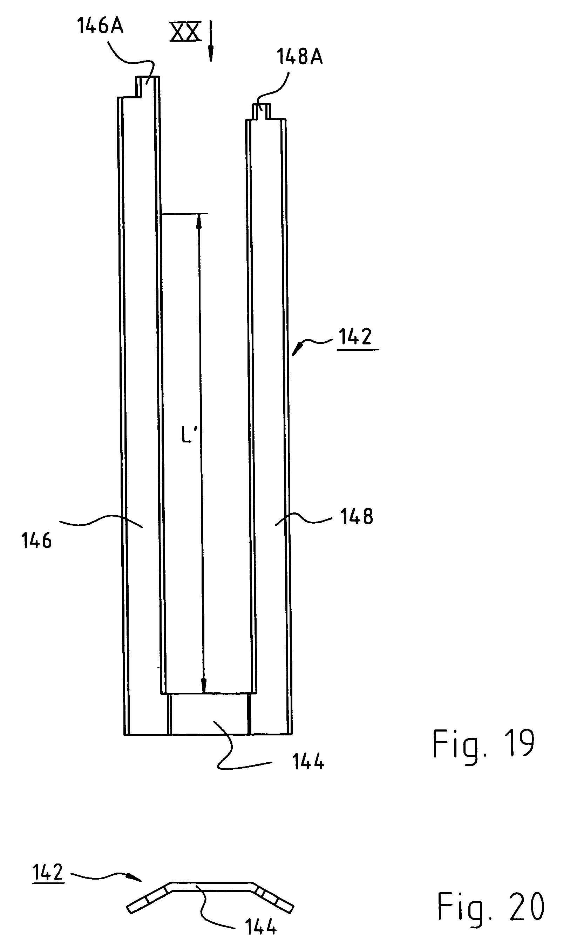

Die **Fig. 18 bis 20** zeigen ein gestanztes und gebogenes Blechteil 142, welches in Fig. 33 die unterste Windung bildet. Es hat an der Basis des U ein kurzes Verbindungsteil 144, das einstückig mit zwei geraden Schenkeln 146, 148 ausgebildet ist, die an ihren freien Enden mit Verbindungselementen 146A, 148 A versehen sind. Die Länge L' (gemäß obiger Definition) ist in Fig.19 zum Vergleich eingetragen. Man erkennt, dass die Schenkel 146, 148 am weitesten aus dem Blechpaket 42 herausragen, und aus Fig. 33 erkennt man, dass diese Schenkel 146, 148 die geringste Breite haben, weil die Breite in Fig. 33 von oben nach unten abnimmt. Der Grund ist, dass gemäß Fig. 1 und 2 die Breite der Nuten 61 bis 66 von außen nach innen abnimmt, weshalb die Breite der Schenkel 146, 148 entsprechend angepasst werden muss, vgl. Fig. 32. Dort erkennt man, dass sich die Schenkel der Windungselemente jeweils bis fast zur Mitte einer Nut erstrecken, um einen hohen Kupferfüllfaktor zu erzielen. Der Schenkel 126 ist breiter und bildet eine Ausnahme von dieser Regel, und deshalb ist der ihm gegenüber liegende Schenkel der benachbarten Spule entsprechend schmaler.

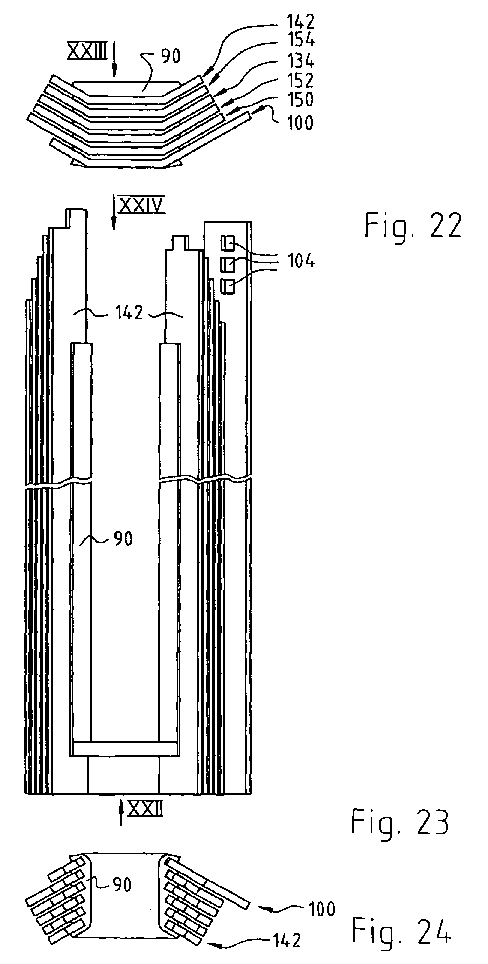

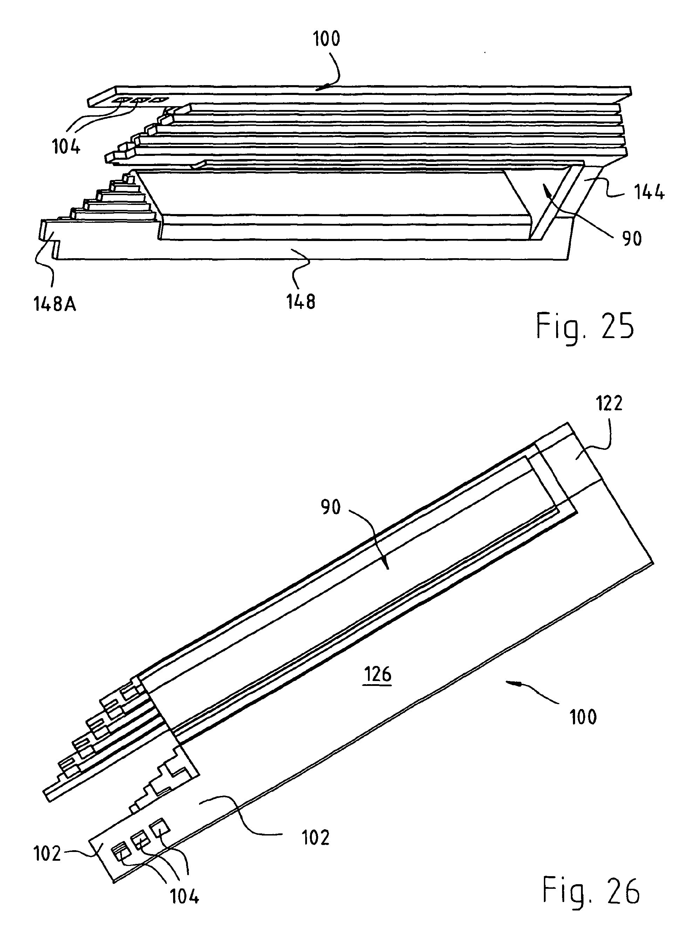

**Fig. 21** zeigt, wie die Windungselemente 100, 134, 142 in ein Formstück 90 eingeschoben sind. Zwischen den Windungselementen 100 und 134 befinden sich noch zwei Windungselemente 150, 152, welche die gleiche Grundform haben, wie das Windungselement 134, aber etwas kürzer und breiter sind, als dieses. Ebenso befindet sich zwischen den Windungselementen 134 und 142 ein Windungselement 154, das die gleiche Grundform hat wie das Windungselement 134, aber etwas länger und etwas schmaler ist als dieses. Die Windungselemente 150, 152, 154 sind aus diesem Grunde nicht separat dargestellt. Die Abnahme der Breite ist aus Fig. 33 klar ersichtlich und dient, wie erläutert, dem Erzielen eines guten Kupferfüllfaktors. Die Form der Anschlusselemente an den Enden der Schenkel bzw. Stäbe ergibt sich aus den Fig. 24, 25, 26 und 33.

Die Fig. 21 bis 26 zeigen aus verschiedenen Blickwinkeln ein mit Windungselementen gefülltes Formstück 90. Falls die Formstücke 90 separat hergestellt werden, füllt man sie mit den Windungselementen, bevor sie im Blechpaket 42 montiert werden, vgl. Fig. 30, wo das links dargestellt und durch eine Linie 160 symbolisiert ist. Anschließend werden die gefüllten Formstücke 90 in das Blechpaket 42 eingeschoben. Alternativ können die Formstücke 90 durch Spritzguss direkt im Blechpaket 42 hergestellt werden, und in diesem Fall werden sie im Blechpaket 42 mit den Windungselementen bestückt.

Nach dem Bestücken werden die Verbinder 130 an den Windungselementen angebracht, was durch ein gestrichelte Linie 162 symbolisiert ist. Danach werden die Querverbinder 72, 80, 86 montiert, symbolisiert durch eine Linie 164, und als letztes folgt die Montage des Verbinders 76 für den Sternpunkt, symbolisiert durch eine Linie 166.

Dabei ergibt sich in einer perspektivischen Darstellung für den Strang U das Bild gemäß Fig. 31 und 32. In **Fig. 31** ist unten die - noch unfertige - Spule 70 (vgl. Fig. 4) mit ihrem Anschluss U dargestellt. Mit ihrem innersten Windungselement 142 und dessen Anschluss 148A ist der Querverbinder 72, wie er in den Fig. 27 bis 29 dargestellt ist, mit seiner Ausnehmung 118 elektrisch verbunden. (Das Maß D, das in Fig. 27 dargestellt ist, ist bei Fig. 31 etwas größer). Der Querverbinder 72 führt gemäß Fig. 31 und 32 zur Spule 74 und dort zum untersten Loch 104 des Windungselements 100, welches in den Fig. 12 bis 14 dargestellt ist. Der Anschluss 112 des Querverbinders 72 ragt in dieses Loch 104 und ist mit ihm elektrisch gut leitend verbunden.

Das am weitesten innen liegende Windungselement 142 der Spule 74 ist mit seinem Anschluss 148 mit dem Sternpunktleiter 76 elektrisch gut leitend verbunden, dessen Form aus den Fig. 31 und 32 klar ersichtlich ist. Es handelt sich um ein gestanztes Teil aus Kupferblech.

**Fig. 32** zeigt zur besseren Orientierung auch die Lage der Statorpole 44 bis 54 und der Nuten 61 bis 66, wie sie auch in den Fig. 1 bis 3 dargestellt sind. Ferner ist in den Fig. 31 und 32 auch die Lage der Querverbinder 80 und 86 eingezeichnet, obwohl diese für den dargestellten Strang U keine Funktion haben und deshalb nur frei im Raume schweben.

In Fig. 32 ist auch der Rotor 43 angedeutet. Dieser hat vier Magnete 170, 172, 174, 176, deren Polarität in der üblichen Weise mit N und S angedeutet ist und die in Ausnehmungen eines Blechpakets 178 eingebettet sind (embedded magnets). Der Rotor 43 ist durch einen Luftspalt 180 vom Blechpaket 42 getrennt.

### Wie aus den Windungsteilen Spulen gemacht werden

**Fig. 33** zeigt, wie der Anschluss 128 des Windungsteils 100 (in der radial äußersten Lage) über das bügelartige Verbindungsteil 130 mit einem Anschluss 182 des Windungsteils 150 verbunden wird. Dazu hat der Bügel 130 links eine Ausnehmung 132, die mit dem Anschluss 128 elektrisch gut leitend verbunden wird, und rechts hat er eine Ausnehmung 184, die mit dem Anschluss 182 elektrisch gut leitend verbunden wird.

Der Strom geht also in Fig. 33 vom Anschluss 102 durch das Windungselement 100 zum Anschluss 128, von dort über den Bügel 130 zum Anschluss 182 des Windungselements 150, dann durch dieses zu dessen Anschluss 186, anschließend von diesem Anschluss über einen nur symbolisch angedeuteten Verbindungsbügel 188 zu einem Anschluss 190 des Windungselements 152, dann durch dieses zu dessen Anschluss 192.

Vom Anschluss 192 fließt der elektrische Strom über einen nur symbolisch angedeuteten Verbindungsbügel 194 zum Anschluss 140A des Windungselements 134, dann durch dieses zu dessen Anschluss 138A, und von diesem über einen nur symbolisch angedeuteten Verbindungsbügel 196 zu einem Anschluss 198 des Windungselements 154. Dann fließt der Strom durch das Element 154 zu dessen Anschluss 200 und von dort über einen symbolisch angedeuteten Verbindungsbügel 202 zum Anschluss 146A des Windungselements 142, und durch dieses zu dessen Anschluss 148A, vgl. Fig. 18.

Vom Anschluss 148A fließt der Strom entweder über einen Querverbinder (vgl. die Fig. 27 bis 29) zur nächsten Spule dieses Stranges, oder zum Sternpunkt 76.

Die Fig. 31 bis 33 zeigen nur die untersten Verbindungsbügel 130 der Spulen 70 und 74, um die Zeichnung übersichtlich zu halten.

Bei der Herstellung geht man so vor, dass man nach der Montage der Formstücke 90 mit den Windungselementen (vgl. Fig. 21 bis 26) als erstes die untersten Verbindungsbügel 130 für alle sechs Spulen 70, 74, 78, 82, 84, 88 an den betreffenden Windungselementen anbringt und elektrisch gut leitend mit diesen verbindet. Man verarbeitet also bevorzugt die Verbindungselemente einer Ebene gleichzeitig.

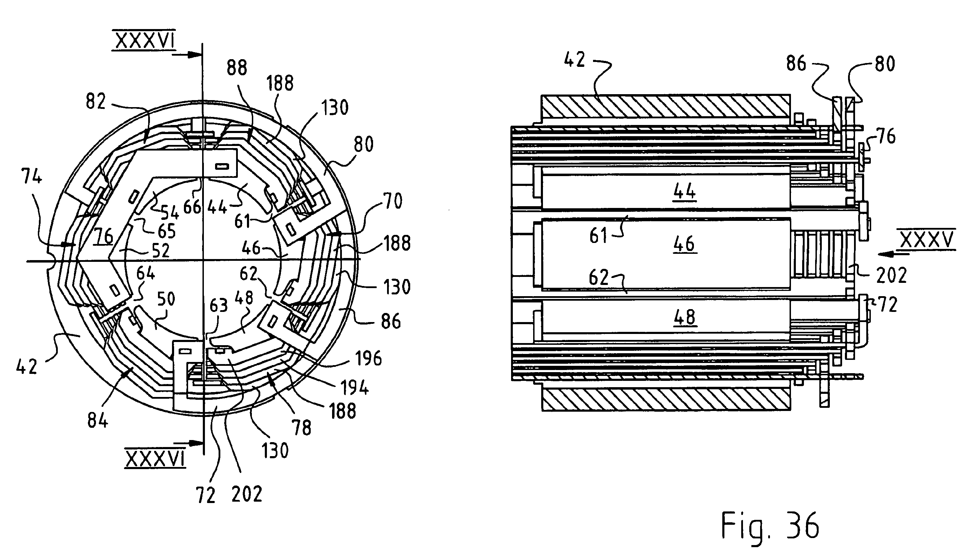

Als nächstes werden dann die Bügel 188 (Fig. 33 bis 36) der nächsten Lage angebracht und elektrisch gut leitend verbunden, dann nacheinander die Bügel 194, 196 und 202, so dass die einzelnen Spulen durchgehend stromleitend sind.

Anschließend werden die einzelnen Querverbinder montiert, beginnend mit dem untersten Querverbinder 72, dessen Montage bei den Fig. 30 und 31 bereits beschrieben wurde, danach der Querverbinder 86, und als letztes der Querverbinder 80. Die drei Löcher 104 (Fig. 12) im Blechteil 100 ermöglichen eine Verbindung mit einem Querverbinder unabhängig davon, in welcher Ebene sich dieser befindet.

Wenn die Querverbinder montiert und elektrisch gut leitend verbunden sind, wird der Sternpunkt-Verbinder 76 montiert, was bereits bei Fig. 30 und 31 beschrieben wurde.

Das bewickelte Statorblechpaket 42 hat dann seine fertige Gestalt, wie sie in den Fig. 34 bis 36 dargestellt ist, und es wird in ein entsprechendes (nicht dargestelltes) Gehäuse eingebaut, welches das Statorblechpaket hermetisch geschlossen umgibt, und der Rotor 34 wird in (nicht dargestellten) Lagern dieses Gehäuses in der üblichen Weise gelagert.

Die beschriebenen elektrischen Verbindungen können widerstandsarm ausgeführt werden, so dass die Statorwicklung wegen des im Mittelwert großen Querschnitts der elektrischen Leiter einen niedrigen Innenwiderstand hat und man auch bei niedrigen Spannungen der Batterie 77 (oder einer sonstigen Spannungsquelle, z. B. einer Brennstoffzelle) ein starkes Drehmoment erzeugen kann.

Das (nicht dargestellte) Gehäuse wird bevorzugt nach außen hermetisch abgeschlossen, um das Eindringen von Fremdkörpern zu vermeiden, welche einen Windungsschluss verursachen könnten. Die Windungselemente können durch einen Ölkreislauf gekühlt werden, um höhere Motorleistungen zu erreichen. Ferner ist es auch möglich, nach der Montage der Windungselemente den gesamten Stator mit einem geeigneten Isolator zu umgießen, z. B. mit einem isolierenden Kunstharz. Naturgemäß sind im Rahmen der Erfindung Modifikationen dieser Art für den Fachmann problemlos möglich.

## Patentansprüche

1. Motor, insbesondere für Niederspannung, welcher aufweist:
Einen Rotor (43);
einen vom Rotor (43) durch einen Luftspalt (180) getrennten Stator (42) mit ausgeprägten Statorpolen (44 bis 54), welche jeweils einen Polkern und einen Polschuh haben und voneinander durch Nuten (61 bis 66) getrennt sind; und
eine in den Nuten (61 bis 66) angeordnete Statorwicklung (68), welche Spulen (70, 74, 78, 82, 84, 88) aufweist, die auf den Polkernen angeordnet sind und
U-förmige Elemente aufweisen, deren Leiterquerschnitt zumindest überwiegend von der Kreisform abweicht,
**gekennzeichnet durch** ein Formstück (90), welches nach Art eines U einen Polkern zumindest bereichsweise umgreift und auf seiner Außenseite mit isolierenden Führungsausnehmungen (98) für Elemente der zugeordneten Spule versehen ist, welches Formstück (90) diese Elemente der zugeordneten Spule gegen den betreffenden Polkern isoliert und sie im Abstand voneinander hält, um Windungsschlüsse zu vermeiden.

2. Motor nach Anspruch 1, bei welchem mindestens einzelne Elemente einer Spule, im Querschnitt gesehen, ein etwa dachartiges Profil aufweisen.

3. Motor nach Anspruch 1 oder 2, bei welchem die einzelnen Elemente einer Spule, im Querschnitt gesehen, etwa nach Art eines Tannenbaumprofils am zugeordneten Formstück angeordnet sind, wobei die - gedachte - Spitze des Tannenbaums dem Rotor zugewandt ist.

4. Motor nach einem der vorhergehenden Ansprüche, bei welchem die U-förmigen Windungselemente der Spulen (70, 74, 78, 82, 84, 88) zumindest teilweise als U-förmige Stanzteile aus einem gut leitenden Blech ausgebildet sind.

5. Motor nach Anspruch 4, bei welchem die Stanzteile (100, 134, 142, 150, 152, 154) gebogen sind und, im Querschnitt gesehen, ein etwa dachartiges Profil aufweisen.

6. Motor nach Anspruch 4 oder 5, bei welchem die Stanzteile Schenkel aufweisen, welche zumindest teilweise in den isolierenden Führungsausnehmungen (98) des Formstück (90) angeordnet sind.

7. Motor nach einem der vorhergehenden Ansprüche, bei welchem jeweils zwei benachbarten U-förmigen Windungselementen ein Verbindungselement (130) zugeordnet ist, welches ein Ende des einen Windungselements mit einem zugeordneten Ende des anderen Windungselements verbindet.

8. Motor nach Anspruch 7, bei welchem das Verbindungselement (130), insbesondere durch Schweißen, mit den betreffenden Enden elektrisch gut leitend verbunden ist.

9. Motor nach Anspruch 7 oder 8, bei welchem bei einer Mehrzahl von Spulen der Statorwicklung die Verbindungselemente (130), welche analogen Windungselementen dieser Spulen zugeordnet sind, im Wesentlichen in der gleichen Ebene angeordnet sind, wobei die Länge der Windungselemente auf diese Ebene abgestimmt ist.

10. Verwendung eines Motors nach einem der vorhergehenden Ansprüche für den Antrieb eines Fahrzeugs.

## Claims

1. Motor, in particular for low voltage, which comprises:
a rotor (43);
a stator (42) which is separated from the rotor (43) by an air gap (180) and has distinct stator poles (44 to 54) which each have a pole core and a pole shoe and are separated from one another by slots (61 to 66);
and a stator winding (68) which is arranged in the slots (61 to 66) and comprises coils (70, 74, 78, 82, 84, 88) which are arranged on the pole cores and comprise U-shaped elements and the conductor cross-section of which is at least mainly other than circular in shape,
**characterised by** a former (90) which in the manner of a U embraces a pole core at least in areas and on its outside is provided with insulating guide recesses (98) for elements of the associated coil, which former (90) insulates these elements of the associated coil from the pole core concerned and keeps them a distance from one another in order to avoid interturn short circuits.

2. Motor according to claim 1, in which at least individual elements of a coil, viewed in cross-section, have a roughly roof-like profile.

3. Motor according to claim 1 or 2, in which the individual elements of a coil, viewed in cross-section, are arranged on the associated former roughly in the manner of a fir tree profile, with the - imaginary - apex of the fir tree facing the rotor.

4. Motor according to one of the preceding claims, in which the U-shaped winding elements of the coils (70, 74, 78, 82, 84, 88) are formed at least in part as U-shaped punched parts from a sheet metal which is a good conductor.

5. Motor according to claim 4, in which the punched parts (100, 134, 142, 150, 152, 154) are bent and, viewed in cross-section, have a roughly roof-like profile.

6. Motor according to claim 4 or 5, in which the punched parts comprise limbs which are arranged at least in part in the insulating guide recesses (98) of the former (90).

7. Motor according to one of the preceding claims, in which each pair of neighbouring U-shaped winding elements has an associated connecting element (130) which connects one end of the first winding element to an associated end of the other winding element.

8. Motor according to claim 7, in which the connecting element (130) is connected to the ends concerned in an electrically well conducting manner, in particular by welding.

9. Motor according to claim 7 or 8, in which in the case of a plurality of coils of the stator winding the connecting elements (130) which are associated with analogous winding elements of these coils are essentially arranged in the same plane, the length of the winding elements being matched to this plane.

10. Use of a motor according to one of the preceding claims for driving a vehicle.

## Revendications

1. Moteur, en particulier pour basse tension, lequel présente :
un rotor (43) ;
un stator (42) séparé du rotor (43) par un entrefer (180), avec des pôles de stator (44 à 54) saillants, lesquels possèdent chacun un noyau polaire et un épanouissement polaire et sont séparés les uns des autres par des encoches (61 à 66) ; et
un enroulement de stator (68) disposé dans les encoches (61 à 66), lequel présente des bobines (70, 74, 78, 82, 84, 88) qui sont disposées sur les noyaux polaires et présentent des éléments en forme de U, dont la section de conducteur diffère au moins de façon prépondérante de la forme circulaire,
**caractérisé par** une pièce façonnée (90) qui entoure au moins sectoriellement un noyau polaire à la manière d'un U et est pourvue sur son côté extérieur d'évidements de guidage isolants (98) pour des éléments de la bobine associée, laquelle pièce façonnée (90) isole ces éléments de la bobine associée par rapport au noyau polaire concerné et les maintient à distance les uns des autres pour éviter les courts-circuits entre les spires.

2. Moteur selon la revendication 1, dans lequel au moins certains éléments d'une bobine présentent, vus en section, un profil approximativement en forme de toit.

3. Moteur selon la revendication 1 ou 2, dans lequel les différents éléments d'une bobine sont, vus en section, disposés sur la pièce façonnée associée approximativement à la manière d'un sapin, la pointe - imaginaire - du sapin étant tournée vers le rotor.

4. Moteur selon l'une des revendications précédentes, dans lequel les éléments de spire en forme de U des bobines (70, 74, 78, 82, 84, 88) sont réalisés, au moins partiellement, sous la forme de pièces découpées en forme de U dans une tôle bonne conductrice.

5. Moteur selon la revendication 4, dans lequel les pièces découpées (100, 134, 142, 150, 152, 154) sont incurvées et présentent, vues en section, un profil approximativement en forme de toit.

6. Moteur selon la revendication 4 ou 5, dans lequel les pièces découpées présentent des branches qui sont disposées, au moins partiellement, dans les évidements de guidage isolants (98) de la pièce façonnée (90).

7. Moteur selon l'une des revendications précédentes, dans lequel à chaque fois deux éléments de spire en forme de U voisins est associé un élément de liaison (130), lequel relie une extrémité d'un élément de spire à l'extrémité associée de l'autre élément de spire.

8. Moteur selon la revendication 7, dans lequel l'élément de liaison (130) est relié aux extrémités concernées d'une manière bonne conductrice de l'électricité, en particulier par soudage.

9. Moteur selon la revendication 7 ou 8, dans lequel, dans le cas d'une pluralité de bobines de l'enroulement de stator, les éléments de liaison (130) qui sont associés à des éléments de spire analogues de ces bobines sont disposés essentiellement dans le même plan, la longueur des éléments de spire étant adaptée à ce plan.

10. Utilisation d'un moteur selon l'une des revendications précédentes pour l'entraînement d'un véhicule.
